# EUROPEAN PATENT SPECIFICATION

(11) **EP 1 593 559 B1**
(45) Date of publication and mention of the grant of the patent: **04.08.2010**
(21) Application number: 04010554.6
(22) Date of filing: 04.05.2004
(51) Int. Cl.: B60R 22/195

(54) **Seat belt restraint system**
Sicherheitsgurt-Rückhaltesystem
Système de retenue par ceinture de sécurité

(43) Date of publication of application: 09.11.2005
(60) Divisional application: 08150747.7
(73) Proprietor: Ford Global Technologies, LLC, Dearborn, MI 48126 (US)
(72) Inventor: Mendis, Kolita, Thousand Oaks, CA 91362 (US)
(74) Representative: Engstrand, Maria Linnéa

(56) References cited:
- DE-A- 2 518 710
- DE-U- 20 218 869
- US-A- 3 957 281
- US-A- 4 258 934
- US-A1- 2002 089 164
- US-A1- 2002 113 425

## Description

### Field of invention

The present invention relates to a vehicle occupant restraint system comprising a belt extending from two effective belt guides located on each side of a seat and which when fastened around an occupant has a belt configuration defined by at least two effective side positions where the belt emerges on each side of the seat.

### Background of invention

Vehicle occupant restraint systems include belts for restraining a vehicle occupant to a seat of the vehicle in case of a crash. When fastened around a vehicle occupant, the belt will attain a belt configuration which is defined by at least two effective side positions where the belt emerges from each side of the seat.

The configuration of the belt in a crash situation is herein referred to as a crash restraint configuration. In many restraint systems, the crash restraint configuration is the normal configuration which the belt attains as soon as it is fastened around the occupant.

Since any restraint system must be voluntarily worn, care has been taken to construct systems wherein the belt has a normal configuration being as comfortable as possible. These systems may have a second configuration, a comfort configuration, which differs from the crash restraint situation so as to be more comfortable, although perhaps less efficient for restraint in case of a crash. In these systems, the comfort configuration is the normal configuration which the belt attains when fastened, whereas the crash restraint configuration is activated upon detection of an impeding crash.

US 2002/0089164 (Rouhana et al.) describes a crash restraint system having a lap belt being movable between a comfort position and a crash restraint position. During normal vehicle operations, the belt guide is located in a comfort position that causes the portion of the lap belt passing over and around the outsides of the occupant's thighs to have a relatively vertical orientation. In the event of an actual or impending crash or other rapid vehicle deceleration, a restraints control module commands an actuation mechanism to move the belt guides rearward with respect to the comfort position, allowing the lap belt to extend in a substantially straight line to the rear-located anchor point. The lap belt thus extends downward and rearward at an angle in order to provide better restraint against forward movement of the occupant's pelvis.

US 2003/0010560 (Motozawa) describes a crash restraint system having an actuator that can selectively remove a slack from the seat belt. The actuator includes a main actuator unit that is adapted to remove a slack from the seat belt by moving a member rearward immediately upon detection of a frontal vehicle crash. It also includes a cushioning member for decelerating the rearward movement of the member after a certain initial travel of the member. Thus the main actuator produces an early rise in the vehicle occupant deceleration, and the cushioning member smoothly connects the time history of the vehicle occupant deceleration to a ride-down condition.

US 6 340 176 (Webber et al.) describes a seat restraint tensioner for a seat restraint system, including a housing, a movable piston disposed in the housing and a gas generator for expelling a gas to move the piston.

US 2002/0113425 describes a belt tensioner for a crash restraint system.

In systems having only a crash restraint configuration as well as in systems also having a comfort configuration, the restraint configuration is normally a configuration in which the lap belt slants forward. The slanting increases the horizontal component of a belt force acting on the occupant, and thus renders the belt more effective for restraining the occupant in a frontal crash.

However, excessive slanting might cause the belt to ride up toward the abdomen during a crash, which might result in excessive loads acting on the body of the vehicle occupant.

### Summary of invention

The object of the invention is to provide an enhanced vehicle occupant restraint system.

This object is achieved in a first aspect of the invention by a vehicle occupant restraint system in accordance with claim 1.

Forward and rearward as used herein relate to directions towards the forward and rearward ends, respectively, of the seat at which the system is arranged. An occupant being seated in the seat will thus always face the forward direction in relation to the seat. Horizontal as used herein relates to directions in a plane parallel to a base floor of the vehicle, which will indeed be horizontal if the vehicle is situated on a truly horizontal ground. Vertical relates to directions normal to the plane including the horizontal directions, which will indeed be vertical if the vehicle is situated on a truly horizontal ground.

The effective belt guides are the utmost guide or anchor on each side of the seat before the belt (or possibly an extension of the belt) emerges and extends out for fastening the occupant. The effective belt guides may be situated adjacent to the effective side positions, where the belt emerges from the sides of the seat. However, the effective belt guides may also be situated at a distance from the effective side positions, so that the belt extends from the effective belt guides to the effective side positions and then around the occupant.

The effective side positions will decide the most forward position at the side of the seat from which the belt may emerge when in a particular configuration. The most forward positions are the positions that the belt will attain if it is subjected to loading when the occupant accelerates forwardly in relation to the seat, such as in a crash situation. Nevertheless, when the belt is not loaded and in particular when it is not in use, it might be possible to force the belt rearwards, so as to emerge at a more rearward position. Adjustment of the comfort configuration according to the occupant's size may also be possible. Accordingly, the effective side positions will be one factor deciding how much the belt will slant during acceleration of the occupant in relation to the seat when fastened around said occupant using a certain belt length.

Moving the effective side positions forwardly with respect to the seat during deceleration in a crash situation allows for some forward excursion of the occupant, and also enables adjustment of the angle which the belt forms with respect to the seat. Accordingly, the horizontal load on the occupant may be limited without excessive slanting of the belt. Also, the forward movement of the effective side positions allows for maintaining a favourable angle of the belt even as the occupant's pelvis slides forward on the seat in a case of a crash from the forward direction. The forward movement of both occupant and the effective side positions can therefore reduce deceleration forces on the lower torso and reduce peak belt loads.

A crash restraint configuration is, in accordance with the introduction, the configuration which the belt assumes when the vehicle is subjected to or detects an impeding crash. It could be the same configuration of the belt as is used during normal driving conditions, or it could be a specific crash restraint configuration which the belt assumes upon detection of an impeding crash situation by a safety system.

The ride down configuration is the configuration allowing the forward most position of the occupant trajectory during a crash. This position will be assumed during a phase following after the immediate impact phase during a crash situation, during which the acceleration of the occupant in relation to the seat continues.

The belt guides are movable in a forward direction for accomplishing the movement of the effective side positions in a direction having a forward component. This allows for several simple constructions, having the further advantage that the length of the belt may be kept constant during the movement from the crash restraint configuration to the ride down configuration. However, although not part of the invention, it is possible to accomplish the movement of the effective side positions in a forward direction also by moving the belt guides in other directions, such as a downward direction. In this case, it might be necessary to simultaneously lengthen the belt so as to accomplish a forward (not rearward) movement of the effective side positions.

When discussing the directions in which the belt guides may be movable, it is to be understood that "a forward direction" is not limited to an exclusively forward displacement. Instead, it means that the belt guide is moved to a more forward position, although this position may be i.e. forward and above or forward and below the original position.

In systems where the movement of the belt guides takes place in a forward direction, the movement may advantageously be accomplished by action of a force acting on the belt due to the forward acceleration of the occupant in relation to the seat. Preferably, the system also comprises a load limiting device being arranged to allow the movement of said effective belt guides when the force acting on the belt exceeds a threshold force. The load limiting device may advantageously comprise an energy absorber being arranged as to be compressible when the force acting on the belt exceeds a threshold force.

Also in systems, which are not part of the invention, where the movement of the belt guides does not have a forward component, a load limiting device may be arranged to allow the movement of said effective belt guides when the resulting belt force exceeds a threshold force. However, in these cases, it will not be possible to use the belt force also for accomplishing the forward movement of the belt guides, but a separate actuator must be arranged for this purpose.

Advantageously, the crash restraint system may further comprise a restraints control module, operative to command the altering of said belt configuration.

The belt guides may be movable by linear or rotational displacement.

Moreover, a method for control of a vehicle occupant restraint system is disclosed, the system comprising a belt which when fastened has a belt configuration defined by at least two effective side positions from which the belt emerges on each side of the seat and the method including, upon forward acceleration of the occupant in relation to the seat in a crash situation, displacing said effective side positions in a forward direction from a crash restraint configuration to a ride down configuration.

Preferably, the forward displacement of the effective side positions is initiated upon detection of a force acting on the belt due to the forward acceleration of the occupant in relation to the vehicle seat exceeding a predetermined threshold force. Advantageously, the forward displacement of the effective side positions is effectuated by action of the force acting on the belt due to the forward acceleration of the occupant in relation to the seat.

The belt may preferably extend from two effective belt guides on each side of the seat, and the displacement of the effective side positions may be accomplished by movement of said belt guides.

In particular, the method may be extended so as to include a first step comprising altering the belt configuration from a comfort configuration to a crash restraint configuration, in which the belt is tightened with respect to the comfort configuration; and a second step comprising said altering of the belt configuration from the crash restraint configuration to a ride down configuration, in which the effective side positions are displaced forwardly with respect to the crash restraint configuration. In this case, the first step may advantageously be initiated upon detection of an impending or occurring crash. The first step may also include a pre-tension step for tightening the belt, and/or a reorientation step for altering the angular position of the belt in respect to the vehicle occupant. Preferably, the first step includes moving the effective side positions rearward in relation to the occupant's seat.

The system according to the invention works with three point belts, four point belts (V or X type) or any other type of belt system involving lap belts.

Additional features and advantages of the invention will appear more clearly from the following detailed description of some preferred embodiments of the invention, which is given by way of non-limiting example only and with reference to the accompanying drawings.

### Brief description of the drawings

Figs 1a to 1c illustrate schematically a first embodiment of the invention.
Figs 2a to 2c depict a first embodiment of an arrangement suitable for implementing the first embodiment of the invention.
Figs 3a to 3c depict an arrangement not being part of the invention.
Figs 4a to 4c depict an arrangement not being part of the invention.
Figs 5a to 5c depict an arrangement not being part of the invention.
Figs 6a to 6c depict a second embodiment of an arrangement suitable for implementing the first embodiment of the invention.
Figs 7a to 7c depict an arrangement suitable for a second embodiment of the invention.
Figs 8a to 8c illustrate schematically an arrangement not being part of the invention.

### Detailed description of preferred embodiments of the invention

As mentioned above, forward and rearward as used herein relate to directions towards the forward or rearward end, respectively, of the seat at which the system is arranged. In the drawings, the forward direction is consistently corresponding to the left hand side, and the rearward direction is consistently corresponding to the right hand side.

Further, the drawings all show side views of belt restraint systems. It is understood that the other side of the system may be arranged in a similar manner to the side shown in the drawings.

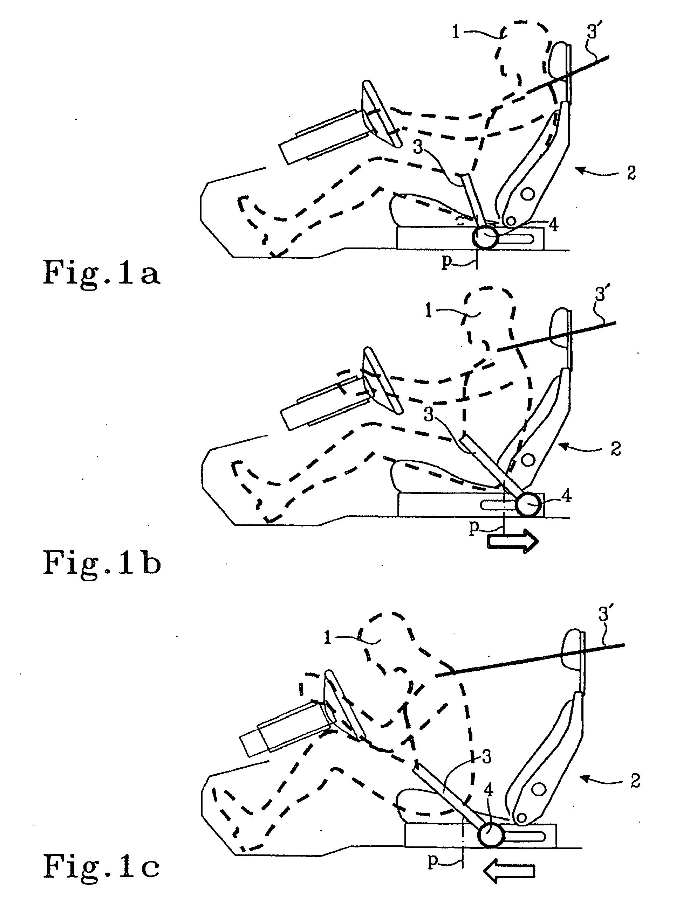

Figs 1a to 1c illustrate a first embodiment of the invention when used in a system having an initial comfort situation as depicted in Fig 1a. The vehicle occupant restraint system is schematically shown when used by an occupant 1 being seated in a seat 2, in this case a driver's seat. The vehicle occupant restraint system comprises a belt 3, which extends from an effective belt guide 4 on each side of the seat 2. The belt emerges from the sides of the seat 2 at the effective side positions P. In Figs 1a-1c the belt 3 is a lap belt, which may advantageously be a part of a three-point belt having an additional shoulder portion 3', being schematically depicted only.

In Fig 1a, the belt is assuming a comfort configuration for normal driving situations. In the comfort configuration, the belt 3 is fastened about the occupant 1 and extends down to the effective side positions P at the side of the occupant's thigh, in a relatively vertical direction. This configuration is chosen because a position where the belt forms a relatively small angle with a vertical axis, that is a position where the belt is not slanting very much, is generally perceived as being more comfortable.

The effective side positions P are displaceable in a rearward direction so as to attain a crash restraint configuration, which is depicted in Fig 1b. Accordingly, in the crash restraint configuration, the effective side positions are situated rearward in relation to their position in the comfort configuration. Consequently, the angle formed by the belt 3 in relation to a vertical axis is greater in the crash restraint configuration than in the comfort configuration, which is why the horizontal component of a force acting on the belt is larger in the crash restraint configuration than in the comfort configuration. The crash restraint configuration is thus more efficient for restraining the occupant 1 during fast acceleration of the occupant in relation to the seat, such as during fast deceleration of the vehicle. In this case, the effective side positions P are displaceable by rearward movement of the effective belt guides 4.

Advantageously, the rearward movement of the effective belt guides 4, enabling the altering from the comfort configuration to the crash restraint configuration, is initiated by an actuator upon detection of an impeding or occurring collision. The actuator may advantageously be coupled to a general safety system of the device, so as to discharge based on information from e.g. obstacle sensors or the like, advantageously being processed by a computer unit.

From the crash restraint configuration as illustrated in Fig. 1b, the effective side positions P are displaceable in a forward direction for altering the belt configuration to a ride down configuration as depicted in Fig. 1c. Accordingly, in the ride down configuration, the effective side positions P are situated forward in relation to their position in the crash restraint configuration. The ride down configuration permits a certain forward excursion of the occupant 1 during the deceleration of the vehicle, without excessive slanting of the belt 3. The load limitation is more efficient if the belt is only moderately slanted, so that the horizontal component of the belt load does not increase too rapidly during the ride down stage.

If a frontal crash is detected, the comfort configuration of the belt depicted in Fig. 1a will rapidly be altered into the crash restraint configuration depicted in Fig. 1b, so as to tighten the belt 3 during an initial phase of the crash. As the crash progresses, the deceleration of the vehicle will increase, resulting in an increase of the forward acceleration of the occupant 1 in relation to the vehicle. The forward acceleration increases the load on the belt 3, so that, when the load exceeds a threshold force, the belt guides 4 are moved so as to displace the effective side positions P forwardly to the ride down configuration. The displacement of the side positions P limits the load to which the occupant 1 will be subject from the belt 3, as well as the slanting of the belt 3. (The system would function in a corresponding manner if arranged at a seat facing the rear of the vehicle and a rearward crash was detected. )

In this case, the forward displacement of the effective side positions is accomplished by forward, linear movement of the effective belt guides 4.

Preferably, the belt guides 4 may be arranged so that they are movable in the forward direction by action of the force resulting on the belt 3 from the occupant's 1 acceleration in a forward direction in relation to the seat 2. Advantageously, a load limiter device may be arranged so as to allow the movement of the effective belt guides 4 only when said force acting on the belt exceeds a predetermined threshold force. Possible arrangements of such embodiments will be described in relation to the subsequent drawings.

It is appreciated that the altering from a crash restraint configuration to a ride down configuration as described above is not dependent on the presence of an initial comfort configuration. Instead, the crash restraint configuration could be the normal driving configuration, from which the ride down configuration is directly accessible.

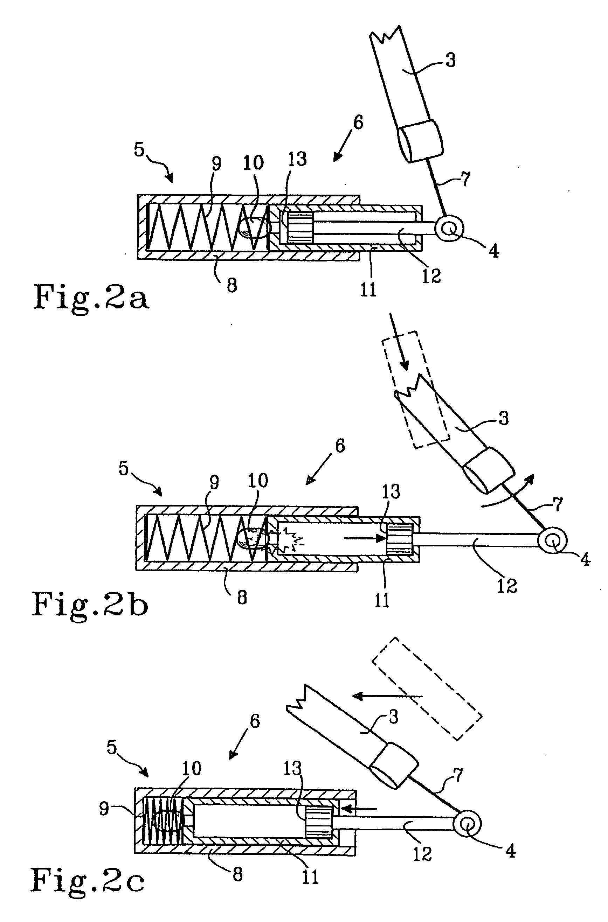

Figs 2a to 2c illustrate a first embodiment of an arrangement suitable for implementing the first embodiment of the invention as described in relation to Figs 1a to 1c. Fig. 2a depicts the arrangement when in a position corresponding to Fig. 1a, Fig. 2b corresponds to Fig. 1b, and Fig. 2c corresponds to Fig. 1c.

Turning to Figs 2a to 2c, the belt 3 extends freely via a wire 7 from an effective belt guide 4, in this arrangement also being a belt anchor from which the wire 7 extends. The belt anchor may be arranged in connection to a belt retractor which provides for adjustment of the length of the belt for individual occupants and for proper positioning of the seat belt restraint system, as is well known in the art.

The arrangement including the belt guide 4 will be arranged in the vicinity of the seat 2 of the vehicle, and preferably right below it. The seat will thus be fixed in relation to the arrangement, and the belt 3 will emerge at each side of it at effective side positions.

The belt guide 4 is arranged in association with a restraint actuator device 6 for accomplishing altering of the belt from a comfort configuration as depicted in Figs 1a/2a to a restraint configuration as depicted in Figs 1b/2b, and a load limiter device 5 for accomplishing the altering of the belt from the restraint configuration to a ride down configuration as depicted in Figs 1c/2c.

The restraint actuator device 6 comprises a piston 12, being arranged in a first housing 11. The outer end of the piston 12 carries the belt guide 4 and is situated in a rearward direction from the housing 11. The inner end of the piston 12 is contained in the housing 11 and forms a piston displacement surface 13 therein. An actuator mechanism 10, in this case a compressed gas device is provided at the forward end of the first housing 11. When the actuator mechanism 10 is activated, the compressed gas is released and expanded inside the first housing 11 where it will exert a pressure on the piston displacement surface 13 so as to move the piston 12 in a rearward direction.

The load limiter device 5 comprises a second housing 8, in which the first housing 11 is movably arranged. An energy absorber, in this case a mechanical spring 9 is provided in the second housing 8, forwardly of the first housing 11 for exerting spring pressure on a forward end of the first housing 11. The energy absorber 9 is subjected to a load resulting from the load acting on the belt 3, which is transmitted via the effective belt guide 4, the piston 12 and the first housing 11. At a certain threshold load on the belt 3, the energy absorber 9 will yield, allowing forward movement of the first housing 11 in the second housing 8, resulting in forward motion of the piston 12 and the effective belt guide 4.

The sequence described in relation to Figs 1a to 1c will have corresponding positions when the arrangement of Figs 2a to 2c is used, as follows:
Fig. 2a illustrates the arrangement when the belt is in a comfort situation. The piston 12 is situated in its most forward position in the first housing 11. The wire 7 and belt 3 extend from the effective belt guide 4 forming a relatively small angle with a vertical axis.
Fig. 2b illustrates the arrangement once the actuator mechanism 10 has been activated, whereby a pressure is exerted on the piston surface 13, forcing the piston 12 rearward bringing the effective belt guide 4 along. The rearward motion of the effective belt guide 4 results in re-orientation and straining of the belt 3, so that the belt 3 attains its crash restraint configuration (see Fig. 1b).
Fig. 2c illustrates the arrangement when the force acting on the belt 3 during the collision exceeds a certain threshold force. A component of the resulting force of the belt 3 is transmitted via the wire 7, the effective belt guide 4, the piston 12, the expanded gas contained in the first housing 11 and the housing 11 to the spring 9, which yields when subjected to a threshold force. The energy absorber 9 yielding results in forward motion of the first housing 11, the piston 12, and the belt guide 4. Accordingly, the belt 3 is moved forwardly, allowing forward excursion of the occupant 1. The orientation of the belt 3 is influenced by the forward motion of the effective belt guide 4, but will also be dependent on the length of belt being fed out of a belt retraction mechanism. However, the more forward position of the effective belt guide 4 enables excess slanting to be avoided.

It is appreciated that the load limiter device 5 will allow forward or rearward movement of the effective belt guide 4 in relation to the present force on the belt 3. Accordingly, during a crash situation, several forward or rearward motions of the effective belt guides 4 may occur as initiated by the load limiter device 5, always keeping the belt 3 in an appropriate configuration considering the present load.

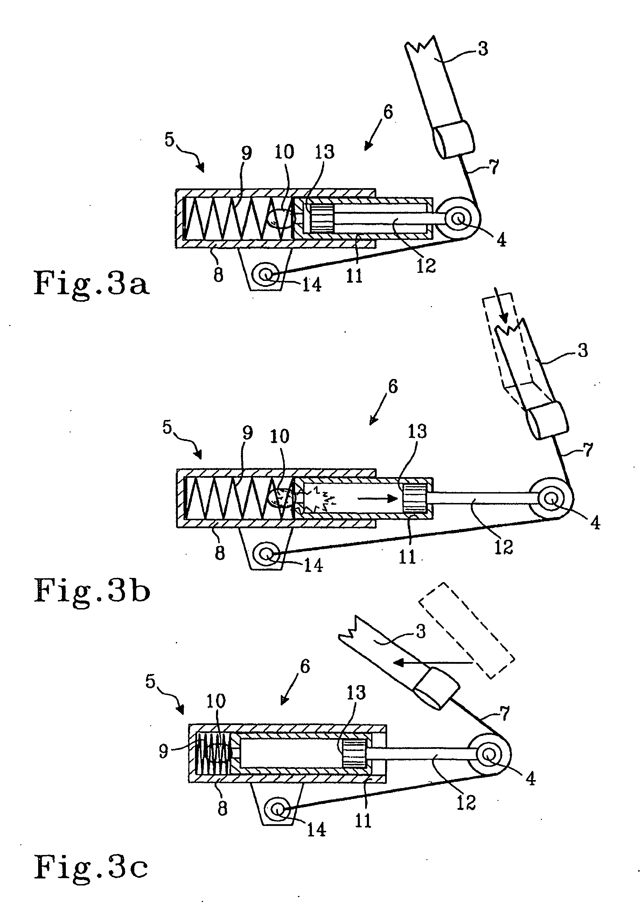

Figs 3a to 3c depict an arrangement not being part of the invention. Figs 3a to 3c correspond to positions as depicted in Figs 1a to 1c.

The arrangement of Figs 3a to 3c has many parts being similar to those of the arrangement described in relation to Figs 2a to 2c. These parts have the same reference numerals as in Figs 2a to 2c and their function will not be described in detail again. The arrangement of Figs 3a to 3c differs from that in Figs 2a to 2c only in that the effective belt guide 4 is not also an anchor point of the belt 3 and wire 7. Instead, a separate anchor point 14 is provided in a forward direction of the effective belt guide 4, in this case being arranged below the second housing 8. The wire 7 continuing with the belt 3 extend rearward from the anchor point 14 around the belt guide 4, which is in the shape of a trolley, and from the trolley towards the seat.

By forward or rearward motion of the piston 12 as described in relation to Figs 2a to 2c, the belt guide 4 in the shape of a trolley is moved forward and rearward, thus accomplishing movement of the belt 3 and the effective side positions P as seen in Figs 1a to 1c.

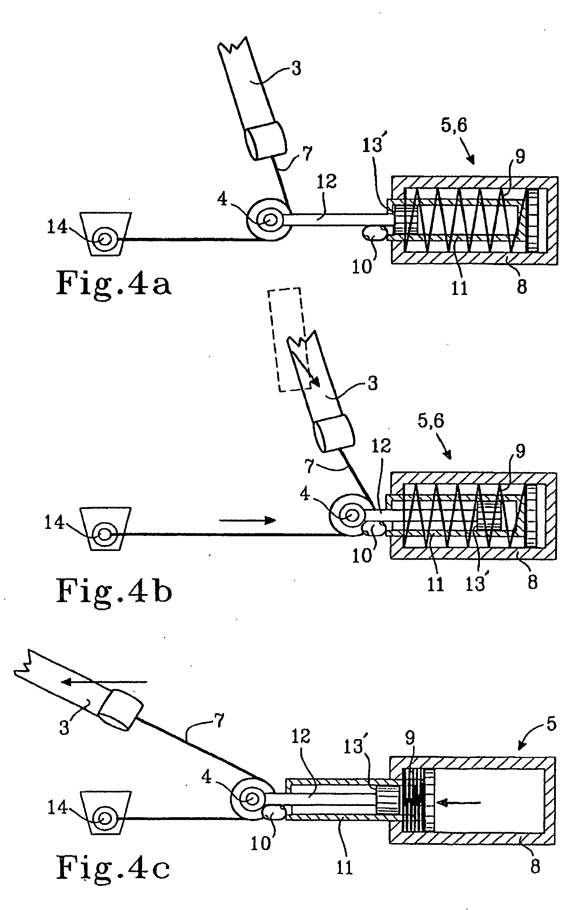

Figs 4a to 4c illustrate an arrangement not being part of the invention. Figs 4a to 4c correspond to positions as depicted in Figs 1a to 1c. Parts of the arrangement in Figs 4a to 4c performing the same essential function as parts in the arrangements of Figs 2a to 2c have been given the same reference numerals. However, their function is not entirely similar, which will be described in the following.

In similarity to the arrangement described in relation to Figs 3a to 3c, the wire 7 connected to the belt 3 are attached to an anchor point 14 being separate from the effective belt guide 4 and located forward thereof. Whereas in the embodiment in Figs 3a to 3c, the restraint actuator device 6 and the load limiter device 5 are arranged on the same side of the belt 3 and wire 7 as the anchor point 14, in this embodiment, the restraint actuator device 6 and the load limiter device 5 are arranged on an opposite side of the belt 3 and wire 7 as the anchor point 14. In this case, the anchor point 14 is arranged forwardly of the restraint actuator device 6 and load limiter device 5.

The effective belt guide 4 is in the shape of a trolley, around which the wire 7 winds, extending from the anchor point 14 towards the seat. The belt guide 4 is arranged at a forward end of a piston 12 being arranged in a first housing 11. An actuator mechanism 10 of the compressed gas type is arranged in relation to the first housing 11, so that upon activation of the actuator mechanism 10, the gas expands so as to urge the piston 12 in a rearward direction, by exerting a pressure on a forward piston surface 13' of the piston 12. The first housing 11 is movably arranged in a second housing 8, concentrically with a mechanical spring 9 which surrounds the second housing 8 and urges it in a rearward direction.

In a comfort configuration as illustrated in Fig. 4a (see also Fig. 1a), the piston 12 carrying the belt guide 4 is in its most forward position, extending out from the first housing 11. The spring 9 urges the first housing 11 in a rearward direction, keeping it in a most rearward position inside the second housing 8.

In a crash restraint configuration as illustrated in Fig. 4b (see also Fig. 1b), the piston 12 is brought in a rearward direction into the housing 11 by the pressure exerted from the gas released from the actuator mechanism 10. The wire 7 and belt 3 are re-oriented and strained by the simultaneous rearward displacement of the belt guide 4.

In a ride down configuration as illustrated in Fig. 4c (see also Fig. 1c), the force acting on the belt 3 has exceeded a threshold force, causing the spring 9 to yield and resulting in forward movement of the first housing 11 in relation to the second housing 8, allowing forward movement of the effective belt guide 4.

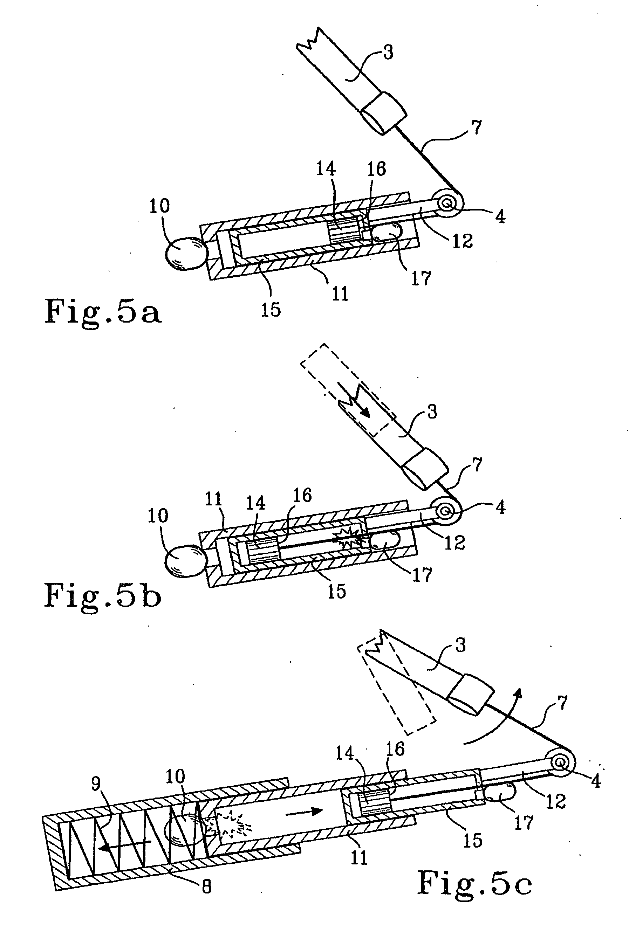

Figs 5a-5c illustrates an arrangement not being part of the invention, wherein a pre-tension step is accomplished before the belt is set to a crash restraint configuration. The altering from a crash restraint configuration to a ride down configuration is similar to the one described in relation to Figs 2a-2c, and corresponding parts have been given the same reference numbers as in those figures. Figs 5a and 5b are intended to illustrate the pre-tensioning step only, which is why the parts of the embodiment relating to the altering from a crash restraint configuration to a ride down configuration have been omitted from these figures and appear only in Fig. 5c.

The arrangement of Figs 5a -5c differs from that described in relation to Figs 2a-2c in that the belt guide 4 is not also an anchor point of the belt 3. Instead, the belt guide 4 has the shape of a trolley, being attached to the piston arm 12. The piston arm 12 is attached on third housing 15, acting as an extended part of the piston inserted in the second housing 8. The third housing 15 surrounds a belt anchor 14 in the form of a piston having a rearward directed piston surface 16, from which anchor 14 the wire 7 connected to the belt 3 extends. Thus, the wire 7 extends from the belt anchor 14 out of the third housing 15, via the trolley being the belt guide 4 up towards the seat and the effective side position. The belt anchor 14 is displaceable within the third housing 15 by activation of an actuator 17 being situated rearward of the third housing 15, so as to exert a pressure on the piston surface 16 of the belt anchor 14.

Fig 5a depicts the arrangement in an initial position corresponding to a comfort configuration of the belt. In this configuration, the second housing 8 is in an initial position in the first housing 11. The third housing 15 is in its most forward position in the second housing 8. The belt anchor 16 is in its most rearward position in the third housing 15. (See Fig. 1a)

Fig. 5b depicts the arrangement when a safety system has detected an occurring or impeding crash, and the actuator 17 is activated. The actuator 15, in this case an expanding gas device, releases the compressed gas which exert a pressure on the piston surface 16 thus forcing the belt anchor 14 forwardly inside the third housing 15. The forward displacement of the belt anchor will bring the wire 7 forward and thus pull the belt 3 downwardly. The position of the belt guide 4 remains fixed, why this initial step results essentially only in pre-tensioning of the belt, and in no or relatively little displacement of the effective side positions.

Fig. 5c illustrates the subsequently following step where the belt is brought to a crash restraint configuration, e.g. the belt guide 4 is moved rearward. This configuration, as well as the set up for the ride down configuration including the load limiter device is similar to that described in relation to Figs 2a to 2c, and reference is made thereto for the function of this arrangement. (See also Fig. 1b, 1c)

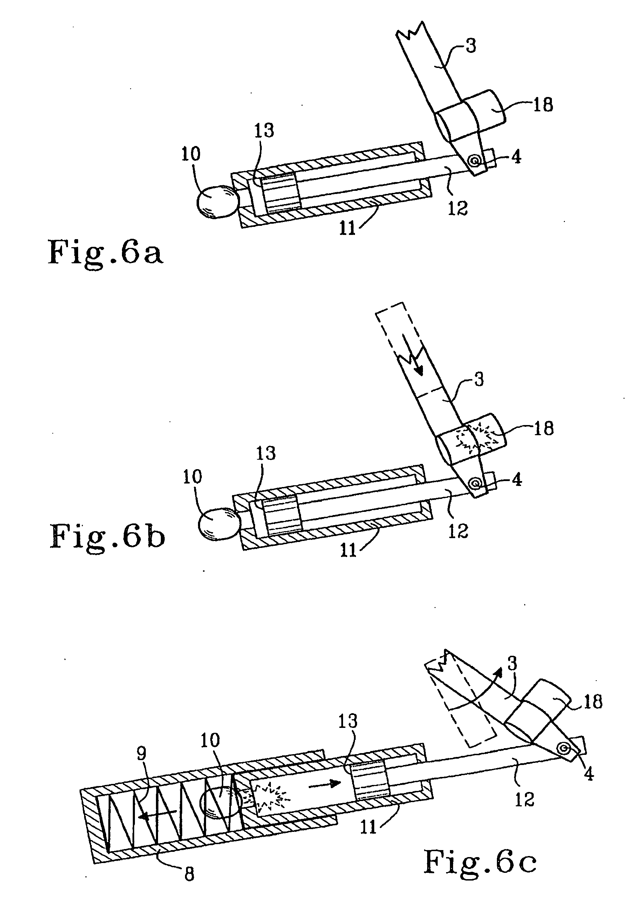

Figs 6a to 6c illustrate a second embodiment of an arrangement suitable for implementing the first embodiment of the invention, which is similar to the system of Figs 5a to 5c in that a pre-tension step is performed before the crash restraint configuration is attained. Figs 6a and 6b are intended to illustrated the pre-tensioning step only, which is why features relating to the altering between the crash restraint configuration and the ride down configuration are omitted from these figures and appear only in Fig. 6c.

The embodiment of Figs 6a to 6c differs from the arrangement of Figs 5a to 5c in that the pretension takes place using a spool pre-tensioner 18. The belt guide 4 is in this case an anchor point of the belt, and is attached to a piston 12 being inserted an the second housing 8. In other aspects, the embodiment is similar to the arrangement of Figs 5a to 5b and 2a to 2c, and reference is made to the description of those arrangements above.

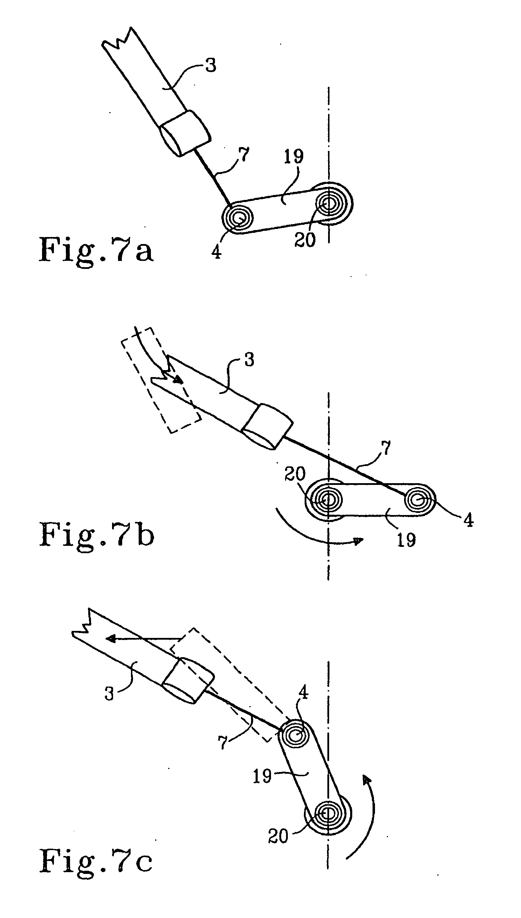

Figs 7a to 7c illustrate an arrangement suitable for a second embodiment of the invention, wherein the belt guide 4 is rotationally displaced for accomplishing the displacement of the effective side positions P. The belt guide 4 is in this case associated to a first end of a rotational arm 19 whose other end is rotationally fixed at a centre 20. The belt guide is connected to the wire 7 continuing with the belt 3.

Fig. 7a shows the system in an initial comfort configuration. Fig. 7b shows the system in a crash restraint configuration in which the belt guide 4 has been moved rearwardly with respect to the comfort configuration by counter clockwise rotation of the arm 19. Fig. 7c shows the system in a ride down configuration, where the belt guide 4 has been moved forwardly with respect to the crash restraint configuration by further counter clockwise rotation of the arm 19. The function of this embodiment will essentially be the same of the first embodiment depicted in Figs 1a to 1c, although the forward displacement of the effective side positions P is accomplished by forward displacement of the effective belt guides 4 via rotational movement instead of linear movement.

Other rotational systems may be envisaged where the rotations are made in different directions when moving from a comfort configuration to a crash configuration or from a crash configuration to a ride down configuration.

It is appreciated that also a load limiter device, a restraint actuator and/or a pre-tensioner device may be arranged in relation to this type of system.

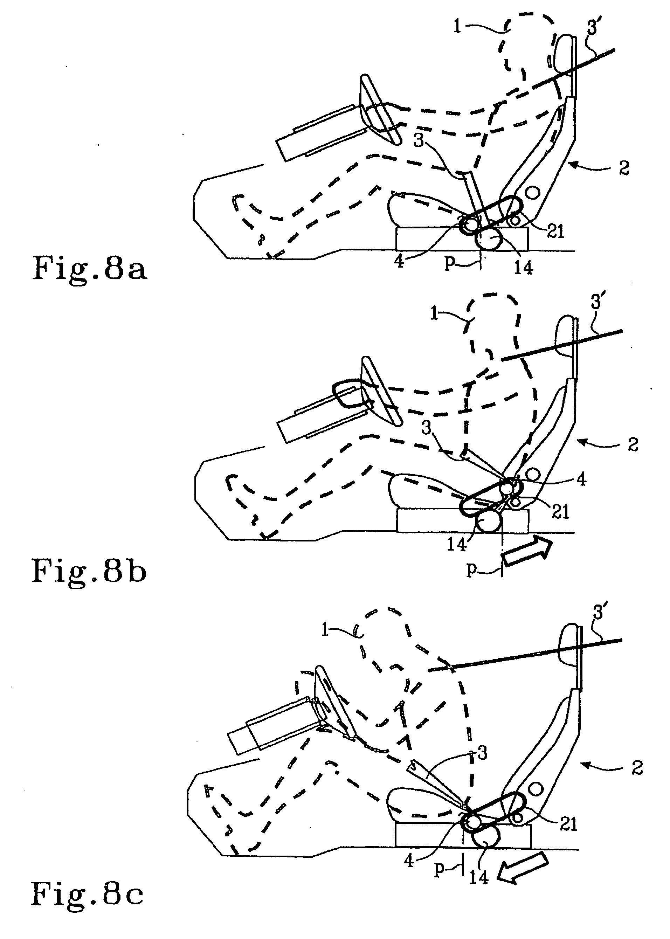

Figs 8a to 8c illustrate (an arrangement not being part) of the invention, where the effective belt guides 4 are movable at the side of the seat 2, whereas the anchor points 14 of the belt 3 are fixed. In this case, the belt guides 4 are movable along a guide rail 21 that is arranged in a slanted position at the seat, such that the belt guides 4 may engage the belt 3 extending from the anchor points 14, thus displacing the effective side positions P. Since the guide rail 21 is slanted, the belt guides 4 are movable in a backward-upward direction or in a forward-downward direction. Thus the forward or backward movement of the belt guides 4 is always accompanied by movement also in a secondary direction.

In other aspects, the function of the arrangement depicted in Figs 8a to 8c is similar to that of Figs 1a to 1c, and reference is made to the above description thereof.

Other embodiments and variants are possible without departing from the scope of the present invention. Although the embodiments described in detail above all illustrate systems where the belt may attain a comfort configuration being different from the crash restraint configuration, it is appreciated that the present invention may be used also in combination with systems where the crash restraint configuration is the normal driving configuration. Naturally, other actuator mechanisms, such as an electric motor, a mechanical spring or a pyrotechnic charge may be used. Instead of a mechanical spring, other energy absorbers may be envisaged, in particular other compressible devices such as a resilient material or deformable bar.

The illustrated arrangements, in particular Figs 1a to 1c and Figs 8a to 8c, show seats that face towards the front of the vehicle, i. e. forward in relation to the seat is towards the front of the vehicle, and refer in particular to collision situations where the crash occurs at least partly from the front, which will cause acceleration of the occupant towards the front of the vehicle. However, it is apparent that the invention is equally applicable for a seat being directed otherwise in the vehicle, e.g. a seat being directed so that an occupant will look towards the rear of the vehicle. In this situation, the restraint system and method of the invention will be most useful if a collision occurs from the rear end of the vehicle.

## Claims

1. A vehicle occupant restraint system comprising a lap belt (3) and a seat (2), wherein the lap belt (3), or an extension of the lap belt (7), extends from two effective belt guides (4) located on each side of a seat (2), said effective belt guides (4) being the utmost guide or anchor on each side of the seat (2) before the lap belt (3), or an extension (7) of the lap belt (3), extends freely out for restraining the occupant (1), and
the lap belt (3) emerges at the sides of the seat (2) at at least two effective side positions (P) located on opposite sides of the seat (2),
such that the lap belt (3), when fastened around an occupant (1) has a belt configuration defined by the at least two effective side positions (P) **characterised in that**
- said effective belt guides (4) are movable in a forward direction upon forward acceleration of the occupant in relation to the seat in a crash situation
- so as to accomplish a forward displacement of the effective side positions (P) in relation to the seat (2) for altering the belt configuration from a crash restraint configuration to a ride down configuration, and **in that**
the length of the lap belt (3), or the lap belt (3) and an extension (7) of the lap belt (3), extending freely between said effective belt guides (4) is kept constant during the forward movement of the belt guides (4) from the crash restraint configuration to the ride down configuration.

2. A vehicle occupant restraint system according to claim 1, wherein the belt guides (4) are arranged to be movable in a forward direction by action of a force acting on the belt (3) due to the forward acceleration of the occupant (1) in relation to the seat (2).

3. A vehicle occupant restraint system according to any one of the preceding claims, comprising a load limiting device (5) being arranged to allow the movement of said effective belt guides (4) when a force acting on the belt (3) due to the forward acceleration of the occupant (1) in relation to the seat (2) exceeds a threshold force.

4. A vehicle occupant restraint system according to claims 2 and 3 in combination, wherein said load limiting device (5) comprises an energy absorber (9) being arranged so as to allow forward movement of the belt guides (4) when the force acting on the belt (3) exceeds a threshold force.

5. A vehicle occupant restraint system according to claim 4, wherein said energy absorber (9) is connected to the belt guide (4) via at least one moveable piston (11, 12).

6. A vehicle occupant restraint system according to claim 1, wherein the movement of the belt guides is accomplished by action of an actuator being activated upon detection of the deceleration of the vehicle exceeding a threshold value or the acceleration of the occupant (1) in relation to the seat (2) exceeding a threshold value.

7. A vehicle occupant restraint system according to any of the preceding claims, said belt (3) further having a comfort configuration for normal driving situations, from which the effective side positions (P) are displaceable in a rearward direction so as to attain said crash restraint configuration.

8. A vehicle occupant restraint system according to claim 7, wherein said effective side positions (P) are displaceable by movement of the effective belt guides (4).

9. A vehicle occupant restraint system according to claim 7 or 8, wherein a restraint actuator device (6) is arranged to accomplish said displacement of the effective side positions (P) in a rearward direction upon detection of an occurring or impending crash.

## Patentansprüche

1. Ein Fahrzeuginsassen-Rückhaltesystem, das einen Beckengurt (3) und einen Sitz (2) umfasst, zu welchem sich der Beckengurt (3) oder eine Verlängerung des Beckengurts (7) von zwei wirksamen Gurtführungen (4) aus erstreckt, die an jeder Seite eines Sitzes (2) angeordnet sind, wobei die wirksamen Gurtführungen (4) die äußerste Führung oder Verankerung an jeder Seite eines Sitzes (2) sind, bevor sich der Beckengurt (3) oder eine Verlängerung (7) des Beckengurts (3) frei heraus erstreckt, um den Insassen (1) zurückzuhalten, und
wobei der Beckengurt (3) an den Seiten des Sitzes (2) an wenigstens zwei effektiven seitlichen Positionen (P) herauskommt, die an gegenüberliegenden Seiten des Sitzes (2) angeordnet sind,
so dass der Beckengurt (3), wenn er um einen Insassen (1) herum angelegt ist, eine Gurtanordnung hat, die durch die wenigstens zwei effektiven seitlichen Positionen (P) bestimmt wird, **dadurch gekennzeichnet, dass**
- die wirksamen Gurtführungen (4) in Reaktion auf eine Vorwärtsbeschleunigung des Insassen in Bezug auf den Sitz in einer Aufprallsituation in eine vorwärts gerichtete Richtung beweglich sind,
- um so eine vorwärts gerichtete Verlagerung der effektiven seitlichen Positionen (P) in Bezug auf den Sitz (2) zu erzielen, um die Gurteinstellung von einer Rückhalteeinstellung beim Aufprall zu einer Heruntergefahreneinstellung ; ("Ride-down"-Einstellung) zu ändern,
und dadurch, dass die Länge des Beckengurts (3), oder des Beckengurts (3) und einer Verlängerung (7) des Beckengurts (3), der oder die sich frei zwischen den beiden effektiven Gurtführungen (4) erstrecken, während der vorwärts gerichteten Bewegung der Gurtführungen (4) von der Rückhalteeinstellung beim Aufprall zu der "Ride-down"-Einstellung konstant gehalten wird.

2. Ein Fahrzeuginsassen-Rückhaltesystem nach Anspruch 1, **dadurch gekennzeichnet, dass** die Gurtführungen (4) so ausgebildet sind, dass sie durch Einwirkung einer auf den Gurt (3) wirkenden, durch die Vorwärtsbeschleunigung des Insassen (1) in Bezug auf den Sitz (2) erzeugten Kraft in eine vorwärts gerichtete Richtung beweglich sind.

3. Ein Fahrzeuginsassen-Rückhaltesystem nach einem der vorhergehenden Ansprüche, dass eine Vorrichtung (5) zur Begrenzung der Belastung umfasst, die so ausgebildet ist, dass sie die Bewegung der wirksamen Gurtführungen (4) zulässt, wenn eine auf den Gurt (3) wirkende, durch die Vorwärtsbeschleunigung des Insassen (1) in Bezug auf den Sitz (2) erzeugte Kraft einen Kraft-Grenzwert überschreitet.

4. Ein Fahrzeuginsassen-Rückhaltesystem nach den Ansprüchen 2 und 3 zusammen, **dadurch gekennzeichnet dass** die Vorrichtung (5) zur Begrenzung der Belastung einen Energie-Absorber (9) umfasst, der so ausgebildet ist, dass er eine vorwärts gerichtete Bewegung der Gurtführungen (4) erlaubt, wenn die auf den Gurt (3) wirkende Kraft einen Kraft-Grenzwert überschreitet.

5. Ein Fahrzeuginsassen-Rückhaltesystem nach Anspruch 4, **dadurch gekennzeichnet, dass** der Energie-Absorber (9) durch mindestens einen beweglichen Kolben (11, 12) mit der Gurtführung (4) verbunden ist.

6. Ein Fahrzeuginsassen-Rückhaltesystem nach Anspruch 1, **dadurch gekennzeichnet, dass** die Bewegung der Gurtführungen durch das Betätigen eines Aktuators vollbracht wird, der aktiviert wird, wenn erkannt wird, dass die Verzögerung des Fahrzeugs einen Grenzwert überschreitet oder die Beschleunigung des Insassen (1) in Bezug auf den Sitz (2) einen Grenzwert überschreitet.

7. Ein Fahrzeuginsassen-Rückhaltesystem nach einem der vorhergehenden Ansprüche, **dadurch gekennzeichnet, dass** der Gurt (3) des weiteren eine Komforteinstellung für normale Fahrsituationen hat, von welcher die effektiven seitlichen Positionen (P) in eine rückwärts gerichtete Richtung fortbewegt werden können, um so in die Rückhalteeinstellung im Falle eines Aufpralls zu gelangen.

8. Ein Fahrzeuginsassen-Rückhaltesystem nach Anspruch 7, **dadurch gekennzeichnet, dass** die effektiven seitlichen Positionen (P) durch Bewegung der wirksamen Gurtführungen (4) fortbewegt werden können.

9. Ein Fahrzeuginsassen-Rückhaltesystem nach Anspruch 7 oder 8, **dadurch gekennzeichnet, dass** eine Rückhalte-Aktuatorvorrichtung (6) so beschaffen ist, dass sie bei Erkennung eines eintretenden oder drohenden Aufpralls die Fortbewegung der effektiven seitlichen Positionen (P) in eine rückwärts gerichtete Richtung vollzieht.

## Revendications

1. Système de retenue d'un occupant d'un véhicule, comprenant une ceinture sous-abdominale (3) et un siège (2), dans lequel la ceinture sous-abdominale (3), ou une extension (7) de la ceinture sous-abdominale, s'étend à partir de deux guides effectifs (4) de ceinture situés de chaque côté d'un siège (2), lesdits guides effectifs (4) de ceinture étant le guide ou ancrage extrême de chaque côté du siège (2) avant que la ceinture sous-abdominale (3), ou une extension (7) de la ceinture sous-abdominale (3), n'en sorte librement pour retenir l'occupant (1), et
la ceinture sous-abdominale (3) émerge sur les côtés du siège (2) au niveau d'au moins deux positions latérales effectives (P) situées sur des côtés opposés du siège (2),
de telle sorte que la ceinture sous-abdominale (3), lorsqu'elle est serrée autour d'un occupant (1), ait une configuration de ceinture définie par lesdites au moins deux positions latérales effectives (P),
***caractérisé en ce que***
lesdits guides effectifs (4) de ceinture sont mobiles dans une direction avant lors d'une accélération vers l'avant de l'occupant par rapport au siège dans une situation de choc,
afin d'effectuer un déplacement vers l'avant des positions latérales effectives (P) par rapport au siège (2) afin de modifier la configuration de la ceinture d'une configuration de retenue lors d'un choc en une configuration permettant la position de la trajectoire de l'occupant la plus en avant,
***et en ce que***
la longueur de la ceinture sous-abdominale (3), ou de la ceinture sous-abdominale (3) et d'une extension (7) de la ceinture sous-abdominale (3), s'étendant librement entre lesdits guides de ceinture effectifs (4), soit maintenue constante pendant le mouvement vers l'avant des guides (4) de ceinture de la configuration de retenue lors d'un choc à la configuration permettant la position de la trajectoire de l'occupant la plus en avant.

2. Système de retenue d'un occupant d'un véhicule selon la revendication 1, dans lequel les guides (4) de ceinture sont prévus pour être mobiles dans une direction avant sous l'action d'une force agissant sur la ceinture (3) provoquée par l'accélération vers l'avant de l'occupant (1) par rapport au siège (2).

3. Système de retenue d'un occupant d'un véhicule selon l'une quelconque des revendications précédentes, comprenant un dispositif (5) limiteur de charge prévu pour permettre le mouvement desdits guides effectifs (4) de ceinture lorsqu'une force agissant sur la ceinture (3), provoquée l'accélération vers l'avant de l'occupant (1) par rapport au siège (2), excède une force limite.

4. Système de retenue d'un occupant d'un véhicule selon les revendications 2 et 3 combinées, dans lequel ledit dispositif (5) limiteur de charge comprend un absorbeur d'énergie (9) prévu pour permettre le mouvement vers l'avant des guides (4) de ceinture lorsque la force agissant sur la ceinture (3) excède une force limite.

5. Système de retenue d'un occupant d'un véhicule selon la revendication 4, dans lequel ledit absorbeur d'énergie (9) est relié au guide de ceinture (4) par au moins un piston mobile (11, 12).

6. Système de retenue d'un occupant d'un véhicule selon la revendication 1, dans lequel le mouvement des guides de ceinture est accompli par l'action d'un actionneur activé lors de la détection d'une décélération du véhicule excédant une valeur limite ou d'une accélération de l'occupant (1) par rapport au siège (2) excédant une valeur limite.

7. Système de retenue d'un occupant d'un véhicule selon l'une quelconque des revendications précédentes, ladite ceinture (3) possédant de plus une configuration de confort pour des situations de conduite normales, à partir de laquelle les positions latérales effectives (P) sont déplaçables dans une direction arrière afin d'atteindre ladite configuration de retenue lors d'un choc.

8. Système de retenue d'un occupant d'un véhicule selon la revendication 7, dans lequel lesdites positions latérales effectives (P) sont déplaçables par mouvement des guides effectifs (4) de ceinture.

9. Système de retenue d'un occupant d'un véhicule selon la revendication 7 ou8, dans lequel un dispositif (6) actionneur de retenue est prévu pour réaliser ledit déplacement des positions latérales effectives (P) dans une direction arrière lors de la détection d'un choc se produisant ou allant se produire.
